(19) Europäisches Patentamt
European Patent Office
Office européen des brevets

(11) Veröffentlichungsnummer: **0 283 948 B1**

# (12) EUROPÄISCHE PATENTSCHRIFT

(45) Veröffentlichungstag der Patentschrift: **19.11.92**

(51) Int. Cl.⁵: **C08F 8/00**, C08L 25/06, C08L 71/12

(21) Anmeldenummer: **88104327.7**

(22) Anmeldetag: **18.03.88**

## (54) Mit Säureendgruppen modifizierte Polymerisate, deren Herstellung und Verwendung.

(30) Priorität: **25.03.87 DE 3709807**

(43) Veröffentlichungstag der Anmeldung:
**28.09.88 Patentblatt 88/39**

(45) Bekanntmachung des Hinweises auf die Patenterteilung:
**19.11.92 Patentblatt 92/47**

(84) Benannte Vertragsstaaten:
**BE DE FR GB IT NL**

(56) Entgegenhaltungen:
**EP-A- 0 211 395**
**FR-A- 2 416 940**
**GB-A- 2 184 732**
**US-A- 4 157 429**

(73) Patentinhaber: **BASF Aktiengesellschaft**
**Carl-Bosch-Strasse 38**
**W-6700 Ludwigshafen(DE)**

(72) Erfinder: **Bronstert, Klaus, Dr.**
**Gartenstrasse 26**
**W-6719 Carlsberg(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft am Kettenende über Säureamidgruppen mit Säureendgruppen oder deren Salzen funktionell modifizierte Homo-, Co- oder Blockcopolymerisate aus Vinylaromaten und/oder konjugierten Dienen sowie deren Hydrierungsprodukte.

In den europäischen Offenlegungschriften EP-A 22 06 02, 22 06 12 und 21 97 28 werden anionisch hergestellte Polymerisate aller Art mit Säureendgruppen bzw. deren Salzen beschrieben, die durch aufeinanderfolgende Umsetzung zunächst mit Äthylenoxid, dann mit Säureanhydrid und schließlich Komplexierung der anionischen Endgruppen hergestellt werden. Die Polymerisate können je nach Aufbau und Zusammensetzung als Kautschuke, thermoplastische Formmassen oder zur Modifizierung von anderen Polymeren Verwendung finden. Die Eigenschaften sind jedoch für manche Anwendungen verbesserungsbedürftig.

So erlauben bekannte Verfahren es nur, eine Säuregruppe je Kettenende in das Polymermolekül einzuführen, was insbesondere bei hohen Molekulargewichten Begrenzung der erreichbaren Eigenschaften bedeutet. Ferner muß man Überschüsse an cyclischen Säureanhydriden einsetzen, um die für gute Eigenschaften erforderliche Umsetzungsrate der Kettenenden von mehr als 80% zu erreichen. Der Überschuß an Säureanhydrid ist jedoch schwierig zu entfernen und bewirkt eine Verschlechterung der Eigenschaften.

Aufgabe der Erfindung ist es daher, Polymere mit Säureendgruppen bzw. deren Salzen zu schaffen, die gegenüber den bekannten Polymeren verbesserte Eigenschaften besitzen, reproduzierbarer herstellbar sind und deren Eigenschaften in einem breiteren Umfang variabel eingestellt werden können. Insbesondere sollten bei der Einführung der Endgruppen äquimolare Mengen an Anhydrid ausreichen. Außerdem sollten auch zwei Carboxylgruppen je Kettenende eingeführt werden können.

Diese Aufgaben wurden durch Polymerisate nach Patentansprüchen 1 und 2 sowie durch Verfahren zur Herstellung der Polymerisate nach Ansprüchen 3 bis 5 gelöst.

Es wurde gefunden, daß man als Ausgangspolymere solche benützen kann, die am Kettenende mindestens eine, vorzugsweise zwei oder mehr primäre und/oder sekundäre oder eine sekundäre und tertiäre Aminendgruppe, vorzugsweise in Form eines Lithiumamides enthalten. Mit diesen Polymeren können bereits mit wenig oder ohne Überschuß von cyclischen Säureanhydriden Umsetzungsgrade von mehr als 80% erzielt werden. Besitzen diese zwei oder mehr Aminendgruppen je Kettenende, so kann man eine entsprechende Zahl von Säureendgruppen in das Molekül einführen, deren Anionen eine entsprechend verstärkte Wirkung aufweisen. Gegebenenfalls reichen weniger Kationen oder Komplexbildner je Säuregruppe als bei bekannten Verfahren für die Erzielung der gewünschten Eigenschaften aus.

Erfindungsgemäß werden also mit Aminogruppen funktionell modifizierte Homo-, Co- oder Blockcopolymerisate aus Vinylaromaten und/oder konjugierten Dienen sowie deren Hvdrierungsprodukte mit Aminendgruppen der Formeln VI, VII, VIII und IX

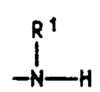

VI

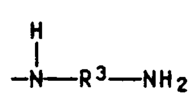

VII

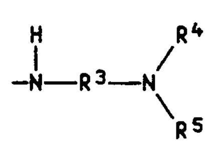

VIII

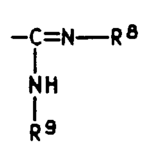

IX ,

in denen der Wasserstoff an den Stickstoffatomen teilweise oder ganz durch Metalle der 1. oder 2. Gruppe des Perioden-Systems ersetzt ist, mit cyclischen Säureanhydriden zur Umsetzung gebracht. Bevorzugt ist

die Umsetzung von funktional modifizierte Polymerisate mit der Endgruppe

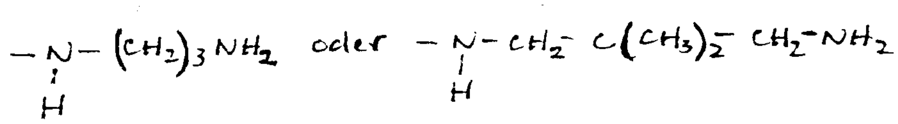

mit 2 Mol Bernsteinsaure- oder Maleinsäureanhydrid je Endgruppe.

Als Ausgangspolymere sind vorzugsweise Homo-, Co- und Blockcopolymerisate aus Vinylaromaten und/oder Dienen geeignet, die anionisch z.B. mit Hilfe von Li-metallorganischen Initiatoren aus den entsprechenden Monomeren erhalten werden und dann mit geeigneten stickstoffhaltigen Verbindungen umgesetzt werden. Es können auch mehrfunktionelle Li-Katalysatoren verwendet werden. Die Polymerisation ist so bekannt, daß sie hier nicht weiter erörtert werden muß. Sie ist nicht Gegenstand dieser Anmeldung. Sie wird ausführlich beschrieben in der europäischen Offenlegungsschrift EP-A 21 13 95 und in den europäischen Patentanmeldungen 87103893 (EP-A-0 244 603) und 87118011 (EP-A 0 273 237). Besonders geeignete Verbindungen sind z.B. 1,5-Diaza-bicyclo[3,1,0]-hexan und seine Derivate, ferner Schiffsche Basen aus aliphatischen oder aromatischen Aminen und Aldehyden.

Als Vinylaromaten kommen insbesondere Styrol, die verschiedenen Alkyl -styrole oder Vinylnaphthalin, als Diene Butadien, Isopren, 2,3-Dimethyl-butadien, Piperylen, Phenylbutadien oder andere anionisch polymerisierbare konjugierte $C_4$- bis $C_{12}$-Diene in Betracht. Außer den jeweiligen Homopolymerisaten kommen auch die Copolymerisate und die bekannten Blockcopolymerisate von Vinylaromaten und Dienen in Frage, wobei je nach Wahl des Initiators und Lösungsmittels Blockcopolymerisate oder Copolymerisate mit statistischer Verteilung der Monomeren erhalten werden können.

Die Polymeren weisen im allgemeinen Durchschnittsmolekulargewichte (Gewichtsmittel $M_w$) zwischen 500 und 500.000 auf, ermittelt durch Gelpermeationschromatographie (GPC) und Vergleich mit standardisierten, zur Eichung geeigneten Polymeren (vgl. G. Glöckner, "Polymercharakterisierung durch Flüssigkeitschromatographie", Verlag A. Hüthig, Heidelberg, 1982. Gemessen wird üblicherweise in 0,25 gew.-%iger Tetrahydrofuranlösung bei 23 ° C und einer Durchflußgeschwindigkeit von 1,2 ml/min).

Die Konzentration im Lösungsmittel bei der Herstellung der Polymeren kann in weiten Grenzen schwanken. Sie wird technisch nur begrenzt durch die Fähigkeit, die Reaktionswärme abzuführen und die bei der Polymerisation entstehende viskose Lösung ausreichend zu durchmischen. Im allgemeinen wird aus diesen Gründen bei Konzentrationen zwischen 5 und 35 Gew.% Feststoff gearbeitet.

Als Lösungsmittel sind u.a. geeignet aliphatische, cycloaliphatische und aromatische Kohlenwasserstoffe, so n-Hexan, n-Heptan, Cyclohexan, Toluol usw.. Es können jedoch auch andere inerte Lösungsmittel benutzt werden, wie z.B. Tetrahydrofuran, Diethylether usw..

Die Polymerisationstemperatur hängt vom Monomeren ab, aber im allgemeinen wird die Polymerisation zwischen -100 ° C und +100 ° C, bevorzugt zwischen -10 ° C und +90 ° C, durchgeführt. Bei diesen Temperaturen verläuft die Polymerisation im allgemeinen mit einer ausreichenden Geschwindigkeit.

Die Hydrierung erfolgt gegebenenfalls nach der Einführung der erfindungsgemäß benötigten Amingruppen. Sie wird normalerweise mit Hilfe von molekularem Wasserstoff und Katalysatoren auf Basis von Metallen oder Metallsalzen der 8. Gruppe des Periodensystems durchgeführt, entweder in homogener oder heterogener Phase. Die Verfahren sind bekannt und werden z.B. in der US-A 3 113 986, der DE-B 1 222 266, DE-A 2 132 263, DE-B 1 116 961 oder DE-A 1 595 345 beschrieben.

Um einen ausreichenden erfindungsgemäßen Effekt zu erzielen, sollen mehr als 80% der Polymermoleküle endständige Basenstickstoffgruppen, wie sie oben beschrieben sind, tragen. Besonders gut geeignet sind solche Polymere, die jeweils zwei basische Stickstoffe je Kettenende, wie oben formuliert, enthalten.

Bei der Umsetzung mit cyclischen Säureanhydriden entstehen Polymere mit Endgruppen der Struktur I - V.

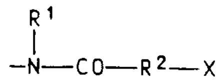

I

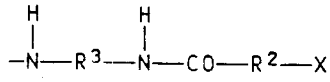

II

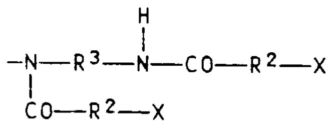

III

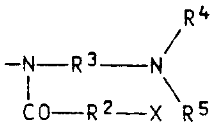

IV

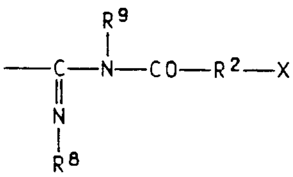

V

worin N = Stickstoff, $R^1$ ein Alkyl- oder Arylrest, $R^3$ eine 2-20gliedrige Brücke ist, von der mindestens die den Stickstoffatomen nächsten Glieder aus -C($R^6$, $R^7$)-Radikalen bestehen, wobei $R^6$ und $R^7$ Wasserstoff-, Alkyl-, Cycloalkyl- oder Arylreste sind und die entfernteren Glieder außer -C($R^6$, $R^7$)-Radikalen auch Äther oder N-Alkyl bzw. N-Aryliminogruppen sein können, $R^2$ ein zweiwertiger organischer Rest ist, $R^4$, $R^5$, $R^8$ und $R^9$ Alkyl-oder Arylreste sind oder zusammen eine Ringbrücke bilden und X eine COOH-oder $SO_3H$-Gruppe oder deren Salze bzw. Komplexe mit ein-, zwei-und/oder dreiwertigen Anionen aus der 1., 2., 3. und 8. Gruppe des periodischen Systems sind.

Zweiwertige organische Reste $R^2$ können sein:

$-CH_2-CH_2-$, $-CH=CH-$, $-CH_2-CH_2-CH_2-$, 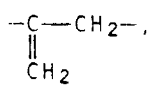,

$-CH_2-CH=CH_2-$, 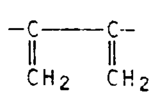, 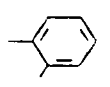, 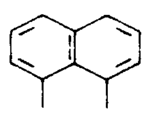, 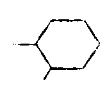,

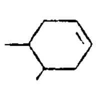, 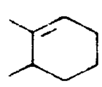, 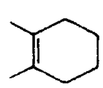, 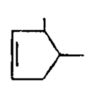, 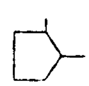 oder 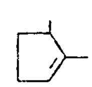,

wobei diese Reste durch Alkyl-, Aryl- und/oder Halogen-substituiert sein können. Generell sind alle zweiwertigen Reste $R^2$ geeignet, bei denen die Substituenten X und COOH cyclische Säureanhydride ausbilden können. Das geht besonders leicht, wenn sich 5- oder 6-gliedrige cyclische Anhydridringe bilden können. Beispiele sind z.B. Bernsteinsäureanhydrid, $\beta$-Sulfopropionsäureanhydrid, Maleinsäureanhydrid, Glutarsäureanhydrid, Phthalsäureanhydrid, die isomeren Di- und Tetrahydrophthalsäureanhydride, Cyclohexan-1,2-dicarbonsäureanhydrid, die verschiedenen isomeren Naphthalindicarbonsäureanhydride, bei denen die Carboxylgruppen jeweils benachbart oder in 1,8-Stellung am Ring hängen, usw., ferner auch o-Sulfobenzoesäureanhydrid und andere mehr.

Die Anhydride werden, worzugsweise in Lösung z.B. in Cyclohexan, Toluol oder Tetrahydrofuran zu der Lösung der Polymerisate gegeben. Falls sie schwer löslich sind, können sie auch in Form einer Suspension zugegeben werden, wobei sie sehr fein verteilt sein sollten, um eine ausreichende Reaktionsgeschwindigkeit

zu gewährleisten. Die Dispergierung kann z.B. mit einem Turbinenmischer, wie Ultraturrax erfolgen.

Die Umsetzung wird im allgemeinen bei Temperaturen zwischen -10°C und 70°C, vorzugsweise zwischen 0°C und 50°C, durchgeführt. Darunter verläuft die Reaktion sehr langsam, darüber nehmen unerwünschte Nebenreaktionen zu.

Bei der Umsetzung entstehen, wenn man von Polymeren mit Li-Amidendgruppen ausgeht, bei den genannten Temperaturen schnell die Li-Salze der erfindungsgemäß funktionalisierten Polymeren. Diese weisen bereits Eigenschaften auf, die zwischen denen von 2-Block und 3-Blockcopolymeren liegen. Die ionische Bindung der Kettenenden läßt sich verstärken, wenn die Hydroxide, Alkoholate oder andere geeignete Derivate mehrwertiger Metalle zugegeben werden. Besonders geeignet sind z.B. die organisch gut löslichen Al-Alkoholate, aber auch die Alkoholate des Zinks sind brauchbar. Die Wirkung ist z.B. bei Al-Alkoholat am stärksten, wenn etwa ein Mol Al je Mol Carboxylgruppe im Polymeren enthalten sind.

Verwendet man Polymere mit freien Aminogruppen für die Umsetzung mit den cyclischen Dicarbonsäureanhydriden, so kann es zweckmäßig sein, die Reaktionstemperatur auf 70-100°C anzuheben, insbesondere, wenn zwei Aminogruppen je Kettenende umzusetzen sind. Will man die entstehenden Carboxylgruppen in Salze überführen, so werden nach der Reaktion, wie zuvor beschrieben, vorzugsweise Verbindungen mehrwertiger Metalle, insbesondere des Aluminiums, benutzt.

Die erfindungsgemäßen Polymeren können aus dem Lösungsmittel, in dem sie hergestellt wurden, nach irgendwelchen bekannten Methoden, wie Fällung mit Nichtlösungsmitteln, Verdampfung des Lösungsmittels in Verdampfern oder Entgasungseinrichtunge, wie Extrudern oder durch Wasserdampfdestillation abgetrennt werden. Die Isolierung und Gewinnung ist nicht Gegenstand der Erfindung.

Die erfindungsgemäßen Polymeren sind für viele Verwendungen geeignet. So verhalten sich Formmassen aus Zweiblockcopolymeren Styrol → Butadien → erfindungsgemäße Endgruppen als Al-Komplex mechanisch ähnlich wie Styrol-Butadien-Styrol-3-Blockcopolymere. Sie zeigen z.B. Gummielastizität und Reißdehnungen bis zu 1000% und darüber, besitzen jedoch eine bessere Verarbeitbarkeit als Dreiblockcopolymere. Sie sind geeignet als Thermoplaste, ferner zur Schlagzähmodifizierung von thermoplastischen Massen auf der Basis von Polystyrol oder mit Polystyrol verträglichen Polymeren, wie Polyphenylenoxid oder dessen Mischungen mit Polystyrol. Erfindungsgemäße Polymere oder Blockcopolymere mit freier Carboxylgruppe sind ferner geeignet für die Modifizierung von Polyurethanen, sowie in Form ihrer Salze als Bestandteil von Schmelzklebern. Letztere besitzen dann eine besonders gute Adhäsion sowohl an polaren und metallischen Oberflächen als auch an Polymeren, wie Polystyrol oder Polyolefinen, Schließlich sind erfindungsgemäße hydrierte Polymere mit Anteilen von mindestens 40% Butadien oder Isopren auch geeignet zur Verbesserung der Eigenschaften von Schmierölen. Diese besitzen dann als Schmiermittel u.a. eine verbesserte Dispergierwirkung für Ruß und Ablagerungen, wie sie bei Betrieb von Verbrennungsmotoren entstehen.

Die Erfindung wird durch die folgenden Beispiele näher erläutert, die jedoch keine Begrenzung darstellen.

Ausgangsstoffe und Lösungsmittel werden jeweils so gereinigt, wie es dem Fachmann bekannt ist für die Verwendung bei der anionischen Polymerisation.

Beispiel 1

Herstellung eines Blockcopolymeren aus 17% Styrol → 83% Butadien vom MGW 60000 → Propylendiaziridin → Bernsteinsäureanhydrid → Al-Komplex.

In einem unter Reinstickstoff mit einer Lösung von Butyllithium in Cyclohexan gespülten 4-Liter-Dreihalskolben, der mit Rührer, Thermometer und einem Stutzen mit Gummimembrane versehen ist, werden 3000 $cm^3$ Cyclohexan und 104 g (1 Mol) gereinigtes Styrol gegeben.

Bei 50°C wird mit einer Injektionsspritze unter gutem Rühren so lange eine 1,4 molare Lösung von sek.-Butyllithium in Cyclohexan zu der Styrollösung gegeben, bis eine bleibende schwache Orangefärbung entsteht. Unmittelbar darauf werden 9 mmol sek.-Butyllithium zugegeben. Die jetzt intensiv orange gefärbte Lösung erwärmt sich. Nach einer Stunde bei 70°C ist die Polymerisation des Styrols beendet. Nun läßt man innerhalb von 2 Stunden bei dieser Temperatur 736 $cm^3$ (500 g) Butadien zulaufen. Nach einer weiteren Stunde wird gekühlt und eine Probe, die ca. 10 g Polymerisat enthält, entnommen, an der Lösungsviskosität und MGW bestimmt werden (MGW durch GPC = 60000, Mw/Mn = 1,07). Die Hauptmenge der Lösung wird bei 40°C mit 11 mmol einer 20gew.-%igen Lösung von Propylendiaziridin (1,5-Diaza-bicyclo-[3,1,0]hexan) in Toluol mittels einer Injektionsspritze durch die Gummimembran versetzt, wobei das verkappte Polymer entsteht. An einer durch Fällen mit Alkohol, Lösen in Toluol und erneutes Fällen mit Alkohol gereinigten und im Vakuum bei 70°C getrockneten Probe wird durch potentiometrische

Titration mit Perchlorsäure in einer Mischung von Chlorbenzol/Eisessig ein Gehalt an Basenstickstoff von 0,045% bestimmt. Gesamtstickstoff nach Kjeldahl: 0,049%.

Die Hauptmenge der Lösung wird nun mit einer feinteiligen Suspension von 10 mmol Bernsteinsäureanhydrid in Cyclohexan versetzt. Die Suspension wurde hergestellt durch Mahlen von 10 g Bernsteinsäureanhydrid in 100 $cm^3$ Cyclohexan mit einem Ultraturraxrührer. Nach einer Stunde bei 40 ° C werden 10 mmol Fluorwasserstoff, gelöst in 10 cm Tetrahydrofuran zugegeben.

Die Lösung wird in 3 gleiche Teile aufgeteilt und diese mit 1, 2 bzw. 3 mmol Al-isopropylat, gelöst in Toluol, versetzt mit Alkohol gefällt und im Vakuum bei 70 ° C getrocknet. Die Produkte zeigen die folgenden VZ (gemessen 0,5% in Toluol):

| | |
|---|---|
| Polymer ohne Endgruppe | 75,5 |
| Modifiziertes Polymer aus Lösung 1 | 86,6 |
| Modifiziertes Polymer aus Lösung 2 | 93,4 |
| Modifiziertes Polymer aus Lösung 3 | 97,8. |

Während das nicht modifizierte Polymer keine Festigkeit besitzt und sich mit den Fingern leicht zerpflücken läßt, wie es der Fachmann kennt bei 2-Blockcopolymerisaten, werden Pressplatten aus den anderen Polymeren mit steigendem Al-Gehalt elastisch und zäh.

Beispiel 2

Blockcopolymer 9% Styrol → 91% Butadien → Propylendiaziridin → Bernsteinsäureanhydrid → Al-Salz

Entsprechend Beispiel 1 werden 560 g eines 9% Styrol enthaltenden Blockcopolymeren mit Butadien vom MGW 60000 hergestellt 1)*, daß am Butadienkettenende mit 1,5-Diaza-bicyclo(3,1,0)-hexan verkappt ist 2)*. Die Lösung des Polymeren wird zur Abspaltung der Methylengruppe mit 10,6 mmol Hydrazinhydrat versetzt, 3x mit je 2 l Wasser gewaschen und aus der organischen Lösung noch enthaltenes suspendiertes und gelöstes Wasser durch Auskreisen abgetrennt 3)*. Die Lösung wird dann beim Siedepunkt des Cyclohexans mit 21,1 mmol Bernsteinsäureanhydrid versetzt, nach 30 Minuten abgekühlt, mit 1 g Irganox 1076** stabilisiert 4)*, in vier gleiche Portionen aufgeteilt, die mit den unten angegebenen unterschiedlichen Mengen einer Lösung von Aluminiumtriisopropylat in Toluol versetzt werden. Die Polymeren werden durch Eingießen in das 3-fache Volumen Alkohol gefällt, mit Alkohol ausgeknetet und im Vakuum bei 70 ° C bis zur Gewichtskonstanz getrocknet. An den Polymeren werden die folgenden Eigenschaften gemessen 5)*, 6)*, 7)-*, 8)*:

* an den mit Zahlen 1) bis 8) gekennzeichnet Stellen wurden Proben entnomen

** Handelsname der Firma Ciba-Geigy, Basel

| Nr. | Probenaufbau | Molverhältnis Polymer:Al | VZ*** | MgW(GPC) | N-Gehalt |
|---|---|---|---|---|---|
| 1) | Blockcopolymer St ; Bu | - | 81,4 | 60000 | - |
| 2) | Polymer 1)+Diaziridin | - | 83,5 | - | 0,05 |
| 3) | Polymer 2)hydrolysiert | - | 87,1 | - | - |
| 4) | Polymer 3)+2 Mol BSA | - | 101 | - | - |
| 5) | Polymer 4)+ AL-isopropanolat | 1:0,47 | 128 | - | - |
| 6) | Polymer 4)+ AL-isopropanolat | 1:0,56 | 138 | - | - |
| 7) | Polymer 4)+ AL-isopropanolat | 1:1,33 | 180 | - | - |
| 8) | Polymer 4)+ AL-isopropanolat | 1:2,67 | 180 | - | - |

*** 0,5% in Toluol

Aus den Zahlen ist zu entnehmen, daß die Lösungsviskosität der Polymeren vom 2-Blockcopolymer zu den modifizierten und mit Aluminiumisopropanolat versetzten Polymeren stark ansteigt. Über ein Molverhältnis von 1:1,33 hinausgehende Mengen an Aluminiumverbindungen bringen jedoch keine weitere Viskositätssteigerung.

An Preßplättchen aus den Polymeren 1), 4), 5), 6) und 7) bei 160° zwischen zwischen Teflon®-Platten mit 1 mm Abstandhaltern aus Stahl gepreßt, werden die folgenden Eigenschaften festgestellt:

| Polymer | Gummi elastizität | Modulus 300% N/mm² | Reiß-dehnung % | Reiß-festigkeit N/mm² |
|---|---|---|---|---|
| 1 | - | - | - | - |
| 4 | - | - | - | - |
| 5 | + | 0,80 | 1500 | 4,0 |
| 6 | ++ | 1,30 | 1050 | 3,15 |
| 7 | +++ | 1,40 | 810 | 2,60 |

- nicht vorhanden
+ mäßig
++ befriedigend
+++ gut

Während die Polymeren 1) und 4) keine Elastizität aufweisen und fast ohne Widerstand zerreißen, zeigen die Polymeren 5)-7) in dieser Reihenfolge zunehmende mechanische Festigkeit und Kautschukelastizität.

Beispiel 3

Herstellung eines erfindungsgemäßen Blockcopolymeren 9% Styrol → 91% Isopren → Diaziridin →

Maleinsäureanhydrid (MSR) vom MGW = 60000 mit 2 Mol Carboxylendgruppen und Al-Salz.

Die Herstellung erfolgt analog Beispiel 2, jedoch wird an Stelle von Butadien Isopren und an Stelle von Bernsteinsäureanhydrid Maleinsäureanhydrid verwendet. An den Polymeren werden die folgenden Eigenschaften gemessen:

| Nr. | Probenaufbau | Molverh. Polymer:Al | VZ* | MgW(GPC) | N-Gehalt Kjeldahl |
|---|---|---|---|---|---|
| 1) | Blockcopolymer SZ ³> Bu | - | 90,5 | 60000 | - |
| 2) | Polymer 1 + Diaziridin | - | 95 | - | 0,051% |
| 3) | Polymer 2 hydrolysiert | - | 114,3 | - | - |
| 4) | Polymer 3 + 2 Mol MSA | - | 139 | - | - |
| 5) | Polymer 4 + Al-isopropanolat | 1:1 | 201 | - | - |
| 6) | Polymer 4 + Al-isopropanolat | 1:1,33 | 230 | - | - |
| 7) | Polymer 4 + Al-isopropanolat | 1:2,67 | 230 | - | - |
| 8) | Polymer 4 + Al-isopropanolat | 1:4 | 233 | - | - |

Die Lösungsviskosität steigt vom nicht modifizierten Polymeren zu den Al-Salzen bis zum Verhältnis Polymer:Al = 1:1,33 stark an, darüber nicht mehr. Die Polymeren 5 bis 8 sind gummielastisch und zeigen hohe Reißdehnungen (> 300%).

## Patentansprüche

1. An Kettenenden über Säureamidgruppen mit Säureendgruppen oder deren Salzen funktionell modifizierte Homo-, Co- oder Blockcopolymerisate aus Vinylaromaten und/oder konjugierten Dienen, sowie deren Hydrierungsprodukte, dadurch gekennzeichnet, daß sie funktionelle Gruppen der Formeln I, II, III oder IV enthalten:

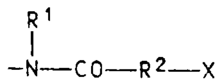

I

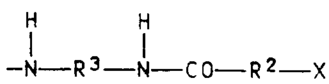

II

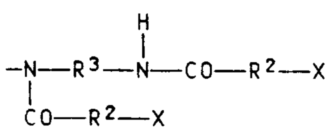

III

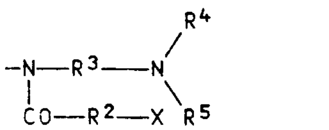

IV

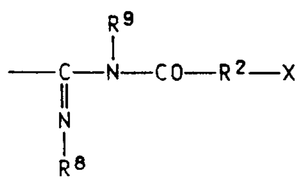

V

worin N = Stickstoff, $R^1$ ein Alkyl- oder Arylrest, $R^3$ eine 2-20gliedrige Brücke ist, von der mindestens die den Stickstoffatomen nächsten Glieder aus -C($R^6$, $R^7$)-Radikalen bestehen, wobei $R^6$ und $R^7$ Wasserstoff-, Alkyl-, Cycloalkyl- oder Arylreste sind und die entfernteren Glieder außer -C($R^6$, $R^7$)-Radikalen auch Äther oder N-Alkyl- bzw. N-Aryliminogruppen sein können, $R^2$ ein zweiwertiger organischer Rest ist, $R^4$, $R^5$, $R^8$ und $R^9$ Alkyl- oder Arylreste sind oder zusammen eine Ringbrücke bilden und X eine COOH-oder $SO_3H$-Gruppe oder deren Salze bzw. Komplexe mit ein-, zwei- und/oder dreiwertigen Anionen aus der 1., 2., 3. und 8. Gruppe des periodischen Systems sind.

**2.** Polymerisate gemäß Anspruch 1, dadurch gekennzeichnet, daß $R^2$ gleich

$-CH_2-CH_2-$, $-CH=CH-$, $-CH_2-CH_2-CH_2-$, 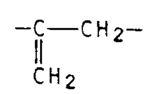

$-CH_2-CH=CH_2-$, 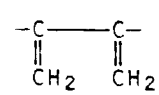 ,

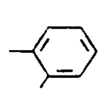 , 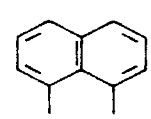 , 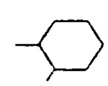 ,

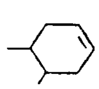 , 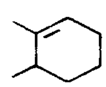 , 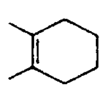 , 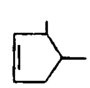 , 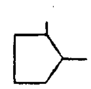 oder 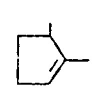 ,

ist; wobei diese Reste selbst wiederum durch Alkyl, Aryl und/oder Halogen substituiert sein können.

**3.** Verfahren zur Herstellung von Polymerisaten gemäß Anspruch 1, dadurch gekennzeichnet, daß man mit Aminogruppen funktionell modifizierte durch anionische Polymerisation hergestellte Homopolymerisate und/oder Co- und/oder Blockcopolymerisate aus Vinylaromaten und/oder konjugierten Dienen sowie

deren Hydrierungsprodukte mit Aminendgruppen der allgemeinen Formeln VI, VII, VIII und IX

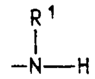

VI

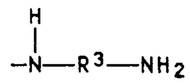

VII

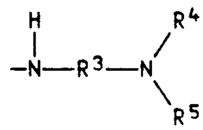

VIII

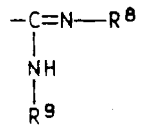

IX ,

in denen der Wasserstoff an den Stickstoffen teilweise oder ganz durch Metalle der 1. oder 2. Hauptgruppe des Periodischen Systems ersetzt sein können, mit cyclischen Säureanhydriden mit der Brücke $R^2$ umsetzt, wobei die Anhydridgruppen aus 2 Carboxylresten oder einen Carboxylrest und einem Sulfonsäurerest aufgebaut sind, und $R^2$ die vorstehend beschriebene Bedeutung hat, und die Umsetzungsprodukte anschließend teilweise, ganz oder mit einem Überschuß an Kationen von Metallen aus der 1. bis 3. oder der 8. Gruppe des periodischen Systems umsetzt.

**4.** Verfahren zur Herstellung von Polymerisaten gemäß Anspruch 1, dadurch gekennzeichnet, daß funktional modifizierte Polymerisate mit der Endgruppe:

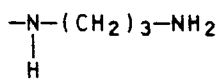

oder

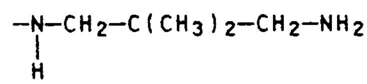

mit 2 Mol cyclischen Dicarbonsäureanhydriden der Bernsteinsäure oder Maleinsäure umgesetzt und dann in Salze umgewandelt werden.

**5.** Verfahren zur Herstellung von Polymerisaten gemäß Anspruch 1, dadurch gekennzeichnet, daß als Gegenkation Aluminium in Form eines Alkoholates eingeführt wird.

**6.** Verwendung von mehr als 40 Gew.% Dienen enthaltenden Polymerisaten nach Anspruch 1 zur Schlagzähmodifizierung von thermoplastischen Massen auf Basis von Polystyrol oder Polyphenylenoxid oder dessen Mischung mit Polystyrol oder mit Polyurethanen.

**7.** Verwendung von mehr als 40 Gew.% Dienen enthaltenden Polymerisaten nach Anspruch 1 als Bestandteil von Schmelzklebern.

**8.** Verwendung von mehr als 40 Gew.% Dienen enthaltenden hydrierten Polymerisaten nach Anspruch 1 als Bestandteil von Schmierölen.

## Claims

**1.** A homopolymer, copolymer or block copolymer obtained from vinylaromatics and/or conjugated dienes which is functionally modified at the chain ends via amide groups with terminal acid groups or salts thereof, or a hydrogenation product thereof, which contains functional groups of the formula I, II, III, IV

or V:

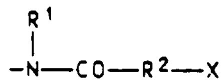 I

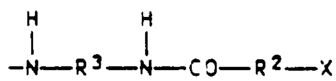 II

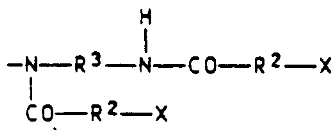 III

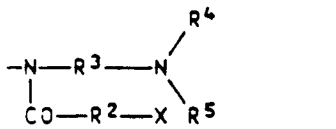 IV

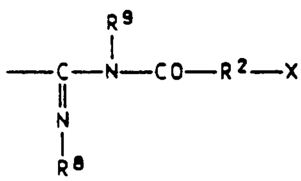 V

where N is nitrogen, $R^1$ is alkyl or aryl, $R^3$ is a 2-membered to 20-membered bridge in which at least the members adjacent to the nitrogen atoms consist of -C($R^6$, $R^7$) radicals, where $R^6$ and $R^7$ are each hydrogen, alkyl, cycloalkyl or aryl, and the more remote members may be not only -C($R^6$, $R^7$) radicals but also ether or N-alkyl- or N-arylimino groups, $R^2$ is a divalent organic radical, $R^4$, $R^5$, $R^8$ and $R^9$ are each alkyl or aryl or together form a cyclic bridge, and X is COOH or $SO_3H$ or their salts or complexes with monovalent, divalent and/or trivalent anions from group 1, 2, 3 or 8 of the Periodic Table.

**2.** A polymer as claimed in claim 1, wherein $R^2$ is

$-CH_2-CH_2-$, $-CH=CH-$, $-CH_2-CH_2-CH_2-$, 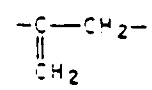,

$-CH_2-CH=CH_2-$, 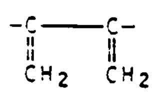,

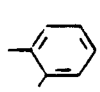, 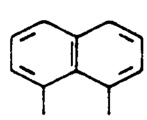, 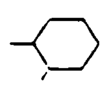,

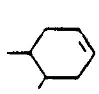, 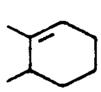, 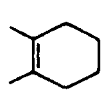, 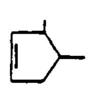, 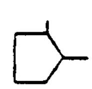 or 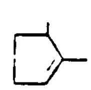

and these radicals in turn may be substituted by alkylaryl and/or halogen.

3. A process for the preparation of a polymer as claimed in claim 1, wherein homopolymers and/or copolymers and/or block copolymers obtained from vinylaromatics and/or conjugated dienes, functionally modified with amino groups and prepared by anionic polymerization, or a hydrogenation product thereof, having terminal amine groups of the formulae VI, VII, VIII and IX

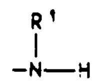

VI

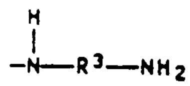

VII

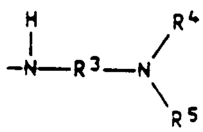

VIII

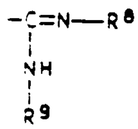

IX

in which some or all of the hydrogen on the nitrogen atoms may be replaced with metals of main group 1 or 2 of the Periodic Table, are reacted with a cyclic anhydride having the bridge $R^2$, the anhydride groups being composed of 2 carboxyl radicals or a carboxyl radical and a sulfonic acid radical and $R^2$ having the above meanings, and the reaction product is then reacted partially or completely or with an excess of cations of metals of group 1 to 3 or 8 of the Periodic Table.

4. A process for the preparation of a polymer as claimed in claim 1, wherein a functionally modified polymer having the terminal group

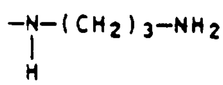

or

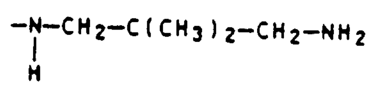

is reacted with 2 moles of a cyclic dicarboxylic anhydride of succinic acid or maleic acid and then converted to a salt.

5. A process for the preparation of a polymer as claimed in claim 1, wherein aluminum in the form of an alcoholate is introduced as a counter-cation.

6. Use of a polymer containing more than 40% by weight of dienes, as claimed in claim 1, for toughening a thermoplastic material based on polystyrene or polyphenylene oxide or a mixture of this with polystyrene or with a polyurethane.

7. Use of a polymer containing more than 40% by weight of dienes, as claimed in claim 1, as a component of hotmelt adhesives.

8. Use of a hydrogenated polymer containing more than 40% by weight of dienes, as claimed in claim 1, as a component of lubricating oils.

## Revendications

1. Homopolymères copolymères ou copolymères séquencés de composés vinylaromatiques et/ou de diènes conjugués, ainsi que produits d'hydrogénation de ces polymères, modifiés fonctionnellement aux extrémités de la chaîne par des groupements acides terminaux sur des groupements amides d'acides, caractérisés en ce qu'ils contiennent des groupements fonctionnels de formules I, II, III, IV ou V

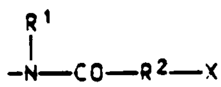

I

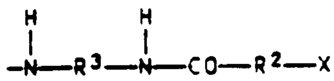

II

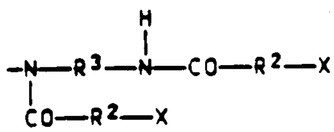

III

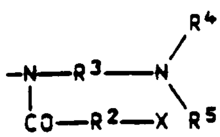

IV

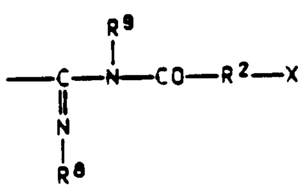

V

dans lesquelles N = azote; $R^1$ est un reste alkyle ou aryle; $R^3$ est un pont à 2-20 maillons, parmi lesquels au moins les maillons les plus proches des atomes d'azote sont constitués par des radicaux $-C(R^6, R^7)$, $R^6$ et $R^7$ étant des atomes d'hydrogène ou des restes alkyle, cycloalkyle ou aryle, et les maillons les plus éloignés peuvent être, en dehors de radicaux $-C(R^6, R^7)$, des groupements éther ou N-alkyl- ou N-arylimino; $R^2$ est un reste organique bivalent; $R^4$, $R^5$, $R^8$ et $R^9$ sont des restes alkyle ou aryle ou forment ensemble un pont cyclique; et X est un groupement COOH ou $SO_3H$ ou un sel ou un complexe de celui-ci avec un anion mono-, bi-et/ou trivalent des groupes I, II, III et VIII du système périodique.

2. Polymères selon la revendication 1, caractérisés en ce que $R^2$ est mis pour

$-CH_2-CH_2-$, $-CH=CH-$, $-CH_2-CH_2-CH_2-$, 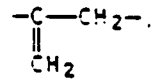

$-CH_2-CH=CH_2-$, 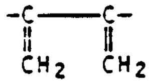 .

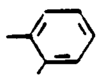 , 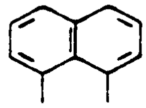 , 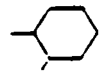 ,

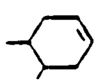 , 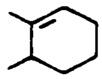 , 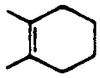 , 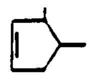 , 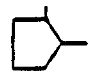 ou 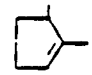 .

ces restes pouvant être eux-mêmes substitués à leur tour par des restes alkyle, aryle et/ou des atomes d'halogène.

**3.** Procédé de préparation de polymères selon la revendication 1, caractérisé en ce qu'on fait réagir des homopolymères et/ou des copolymères et/ou des copolymères séquencés de composés vinylaromatiques et/ou de diènes conjugués, ainsi que des produits d'hydrogénation de ces polymères, modifiés fonctionnellement par des groupements amino et préparés par polymérisation anionique, comportant des groupements amine terminaux de formules générales VI, VII, VIII et IX

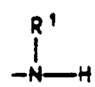 VI

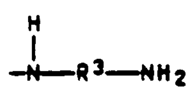 VII

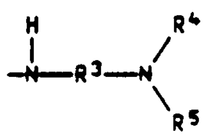 VIII

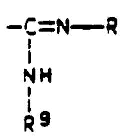 IX .

dans lesquelles les atomes d'hydrogène sur les atomes d'azote peuvent être remplacés partiellement ou totalement par des métaux du groupe IA ou IIA du système périodique, avec des anhydrides d'acides cycliques renfermant le pont $R^2$, les groupements anhydride étant constitués par 2 restes carboxyle ou par un reste carboxyle et un reste acide sulfonique, et $R^2$ ayant la signification sus-indiquée, puis on fait réagir les produits réactionnels en partie, en totalité ou avec un excès de cations de métaux des groupes I à III ou VIII du système périodique.

**4.** Procédé de préparation de polymères selon la revendication 1, caractérisé en ce que des polymères modifiés fonctionnellement, comportant le groupement terminal

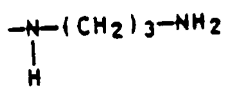 ou 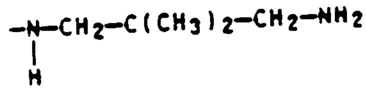

sont mis en réaction avec 2 moles d'anhydride dicarboxylique cyclique de l'acide succinique ou de l'acide maléique, puis convertis en sels.

**5.** Procédé de préparation de polymères selon la revendication 1, caractérisé en ce que de l'aluminium sous forme d'un alcoolate est introduit en tant que contre-cation.

**6.** Utilisation de polymères selon la revendication 1, contenant plus de 40% en poids de diènes, pour la modification dans le sens de la résilience de masses thermoplastiques à base de polystyrène, de poly-(oxyde de phénylène) ou d'un mélange de celui-ci avec du polystyrène ou avec des polyuréthannes.

**7.** Utilisation de polymères selon la revendication 1, contenant plus de 40% en poids de diènes, comme constituant de colles à fusion.

**8.** Utilisation de polymères hydrogénés selon la revendication 1, contenant plus de 40% en poids de diènes, comme constituant d'huiles lubrifiantes.